# EUROPEAN PATENT APPLICATION

(11) **EP 4 807 631 A1**
(43) Date of publication of application: **16.09.2026**
(21) Application number: 24893567.8
(22) Date of filing: 22.11.2024
(51) Int. Cl.: G06N 5/04

(54) **REASONING METHOD AND COMMUNICATION APPARATUS**

(30) Priority: 24.11.2023 CN 202311600465
(71) Applicant: Huawei Technologies Co., Ltd., Shenzhen, Guangdong 518129 (CN)
(72) Inventor: ZHANG, Zhengming, Shenzhen, Guangdong 518129 (CN); TIAN, Yang, Shenzhen, Guangdong 518129 (CN); SUN, Yan, Shenzhen, Guangdong 518129 (CN)
(74) Representative: Pfenning, Meinig & Partner mbB
(86) International application number: PCT/CN2024/133761
(87) International publication number: WO 2025/108413

(57) **Abstract**

This application provides an inference method and a communication apparatus. In this method, a first AI model may obtain, through inference based on a first prompt entered by a user and local information of a network device in a geographical range related to the first prompt, a second prompt including context information of the first prompt, so that the first AI model or a second AI model can perform inference based on the first prompt with the context information supplemented, to obtain a more accurate reply result.

## Description

This application claims priority to Chinese Patent Application No. 202311600465.6, filed with the China National Intellectual Property Administration on November 24, 2023 and entitled "INFERENCE METHOD AND COMMUNICATION APPARATUS", which is incorporated herein by reference in its entirety.

### TECHNICAL FIELD

This application relates to the field of communication technologies, and more specifically, to an inference method and a communication apparatus.

### BACKGROUND

Artificial intelligence (artificial intelligence, AI) has been widely applied to the field of communication technologies. Currently, when a user asks a question based on some AI models (for example, a large language model (large language model, LLM)), the user may not provide a comprehensive question description. In this case, the AI models have low inference accuracy when a question prompt is short. To implement a precise service, the AI models need to clearly locate the question asked by the user. Consequently, the user needs to interact with the AI models a plurality of times, causing a long delay for the AI models to infer a reply that the user is satisfied with, and finally leading to poor user experience.

### SUMMARY

This application provides an inference method, so that an AI model can provide a more accurate reply for a user, thereby improving user experience.

According to a first aspect, an inference method is provided. The method may be performed by a first AI model, or may be performed by a component (for example, a chip or a circuit) of the first AI model. This is not limited herein.

The method includes: The first AI model receives a first prompt from a terminal device, where the first prompt is used to request returning a corresponding reply based on the first prompt; the first AI model obtains a second prompt based on the first prompt and local information of a first network device, where the second prompt is used to describe information corresponding to at least one parameter that is in the local information of the first network device and that is related to the first prompt, the local information of the first network device is characteristic information of a cell covered by the first network device, and the first network device is a network device in a geographical range related to the first prompt; and the first AI model sends a third prompt to a second AI model, where the second AI model is an AI model that infers a reply corresponding to the first prompt, and the third prompt includes the first prompt and the second prompt, or the first AI model sends a first reply result to the terminal device based on a third prompt.

Based on the foregoing technical solution, the first AI model may supplement, based on the local information of the first network device, context information corresponding to the first prompt. Then, the first AI model may perform inference based on a prompt with the context information supplemented, or may assist the second AI model in performing inference. This can not only reduce a number of interactions with a user and reduce an inference delay, but also improve inference accuracy of an AI model, ensure a requirement of the user for service quality, and improve user experience.

With reference to the first aspect, in some implementations of the first aspect, the first AI model obtains a fourth prompt based on the first prompt, where the fourth prompt is used to describe the at least one parameter related to the first prompt.

In the foregoing technical solution, the first AI model uses the received first prompt as an input of the AI model, to explore a deeper requirement behind the user prompt. For example, if the first prompt is "Please recommend a library", the first AI model may infer, based on the "library" in the first prompt, that the user is mainly engaged in an indoor activity, and may use a wireless network to implement operations such as online book reading and retrieval, in-library navigation, and electronic cloud note taking. Therefore, the fourth prompt "Also take wireless service quality into account" may be inferred and generated.

With reference to the first aspect, in some implementations of the first aspect, the third prompt further includes the fourth prompt.

With reference to the first aspect, in some implementations of the first aspect, the first prompt does not include geographical range information or the geographical range information included in the first prompt does not meet geographical range accuracy required for inference. Before the first AI model obtains the second prompt, the method further includes: The first AI model send a fifth prompt to the terminal device, where the fifth prompt prompts to enter the geographical range information related to the first prompt, or the fifth prompt includes a sixth prompt and a plurality of pieces of candidate geographical range information, and the sixth prompt prompts to select, from the plurality of pieces of candidate geographical range information, the geographical range information related to the first prompt; the first AI model receives a seventh prompt from the terminal device, where the seventh prompt indicates the geographical range information related to the first prompt; and the first AI model obtains the local information of the first network device based on the seventh prompt.

Based on the foregoing technical solution, the first AI model may obtain, based on the seventh prompt, local data of a network device corresponding to a corresponding area, and supplement the first prompt with context information based on the obtained local data of the network device.

With reference to the first aspect, in some implementations of the first aspect, the first AI model sends the third prompt to the second AI model. The method further includes: The first AI model receives a second reply result from the second AI model, where the second reply result is a reply result obtained by the second AI model through inference based on the third prompt; the first AI model verifies, based on the local information of the first network device, that the second reply result is an appropriate reply result; and the first AI model sends the second reply result to the terminal device.

With reference to the first aspect, in some implementations of the first aspect, the method further includes: The first AI model receives a third reply result from the second AI model, where the third reply result is a reply result obtained by the second AI model through inference based on the third prompt; and the first AI model verifies, based on the local information of the first network device, that the third reply result is an inappropriate reply result, and the first AI model sends an eighth prompt to the second AI model, where the eighth prompt includes the third prompt and a ninth prompt, and the ninth prompt prompts to infer a new reply result based on the third prompt.

In the foregoing technical solution, the first AI model may verify an inference result of the second AI model by using the obtained local information of the first network device, to ensure that a reply finally sent to the user is an appropriate reply, and avoid a decrease in user experience caused when the second AI model obtains an inappropriate reply result due to a hallucination.

With reference to the first aspect, in some implementations of the first aspect, before the first AI model sends a first result to the terminal device based on the third prompt, the method further includes: The first AI model verifies, based on the local information of the first network device, that the first result is an appropriate reply result.

With reference to the first aspect, in some implementations of the first aspect, before the first AI model sends the first reply result to the terminal device based on the third prompt, the method further includes: The first AI model obtains a fourth reply result through inference based on the third prompt; and the first AI model verifies, based on the local information of the first network device, that the fourth reply result is an inappropriate reply result.

In the foregoing technical solution, the first AI model may verify an inference result of the first AI model by using the obtained local information of the first network device, to ensure that a reply finally sent to the user is an appropriate reply, and avoid a decrease in user experience caused when the first AI model obtains an inappropriate reply result due to a hallucination.

With reference to the first aspect, in some implementations of the first aspect, the method further includes: The first AI model stores a first sample in a local sample library, where the first sample includes the third prompt and a final reply result of the third prompt.

With reference to the first aspect, in some implementations of the first aspect, that the first AI model obtains the second prompt based on the first prompt and the local information of the first network device includes: The first AI model obtains the second prompt based on the first prompt, the local information of the first network device, and a tenth prompt, where the tenth prompt is used to describe at least one sample related to the first prompt in the sample library.

In the foregoing solution, historical samples of the user is added before the first prompt, and context information of the user prompt is enriched based on the historical samples of the user, so that the AI model for inference out a reply result can further provide an accurate personalized service for the user based on information related to a user habit or preference during inference, thereby further improving user experience.

With reference to the first aspect, in some implementations of the first aspect, the first AI model is an AI model that infers a reply corresponding to the first prompt, and the first AI model is a cloud AI model or an AI model of a network device that serves the terminal device, or the second AI model is an AI model that infers a reply corresponding to the first prompt, the first AI model is an AI model of a network device that serves the terminal device, and the second AI model is a cloud AI model.

For example, the first AI model and the second AI model are large language models LLMs.

According to a second aspect, a communication apparatus is provided. The apparatus is configured to perform the method provided in the first aspect. Specifically, the apparatus may include a unit and/or a module, for example, a processing unit and/or a communication unit, configured to perform the method in any aspect of the first aspect or any possible implementation of the first aspect.

In an implementation, the apparatus is a first AI model. When the apparatus is the first AI model, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first AI model. When the apparatus is the chip, the chip system, or the circuit used in the first AI model, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a third aspect, a communication apparatus is provided. The apparatus includes at least one processor, where the at least one processor is coupled to at least one memory, the at least one memory is configured to store a computer program or instructions, and the at least one processor is configured to invoke the computer program or the instructions from the at least one memory and run the computer program or the instructions, to cause the communication apparatus to perform the method in the first aspect or any possible implementation of the first aspect.

In an implementation, the apparatus is a first AI model.

In another implementation, the apparatus is a chip, a chip system, or a circuit used in the first AI model.

According to a fourth aspect, a processor is provided, configured to perform the method provided in the first aspect.

Operations such as sending and obtaining/receiving related to the processor may be understood as operations such as outputting and receiving or inputting of the processor, or operations such as sending and receiving performed by a radio frequency circuit and an antenna, unless otherwise specified, or provided that the operations do not contradict actual functions or internal logic of the operations in related descriptions. This is not limited in this application.

According to a fifth aspect, a computer-readable storage medium is provided. The computer-readable storage medium stores program code executed by a device, and the program code is used to perform the method in the first aspect or any possible implementation of the first aspect.

According to a sixth aspect, a computer program product including instructions is provided. When the computer program product is run on a computer, the computer is caused to perform the method in the first aspect and any possible implementation of the first aspect.

According to a seventh aspect, a chip is provided. The chip includes a processor and a communication interface. The processor reads, through the communication interface, instructions stored in a memory, to perform the method in the first aspect or any possible implementation of the first aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method in the first aspect or any possible implementation of the first aspect.

### BRIEF DESCRIPTION OF DRAWINGS

FIG. 1 is a diagram of an application framework 100 in a communication system to which an embodiment of this application is applicable;
FIG. 2 is a diagram of an application framework 200 in a communication system to which an embodiment of this application is applicable;
FIG. 3 is a diagram of a communication system 300 to which an embodiment of this application is applicable;
FIG. 4 is a diagram of a neuron structure;
FIG. 5 is a schematic flowchart of a communication method 500 according to this application;
FIG. 6a and FIG. 6b are a diagram of a cloud-network synergy inference method 600 according to this application;
FIG. 7 is a diagram of a possible structure of an AI model of a network device;
FIG. 8 is a block diagram of a communication apparatus 800 according to an embodiment of this application; and
FIG. 9 is a block diagram of a communication apparatus 900 according to an embodiment of this application.

### DESCRIPTION OF EMBODIMENTS

The following describes technical solutions in embodiments of this application with reference to accompanying drawings.

Before embodiments of this application are described, the following several descriptions are first provided.
1. In descriptions of embodiments of this application, unless otherwise specified, "a plurality of" means two or more than two.
2. In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.
3. Various numbers in this application are merely used for differentiation for ease of description, and are not used to limit the scope of this application. Sequence numbers in this application do not mean an execution sequence, and the execution sequence of the processes should be determined based on functions and internal logic of the processes. For example, in the specification, claims, and accompanying drawings of this application, the terms "first", "second", "third", "fourth", and various other term numerals (if existent), are intended to distinguish between similar objects, but are not intended to limit sizes, content, a sequence, a time sequence, priorities, importance, or the like of the plurality of objects. For example, first information and second information do not indicate a difference in an information amount, content, a priority, importance, or the like.
4. The terms "include", "have" and any variant thereof are intended to cover non-exclusive inclusion. For example, a process, method, system, product, or device that includes a series of steps or units is not necessarily limited to those expressly listed steps or units, but may include other steps or units not expressly listed or inherent to the process, method, product, or device.
5. In embodiments of this application, that "a network element A sends information A to a network element B" may be understood as that a destination end of the information A or an intermediate network element in a transmission path to the destination end is the network element B, and may include directly or indirectly sending the information to the network element B. That "the network element B receives the information A from the network element A" may be understood as that a source end of the information A or an intermediate network element in a transmission path from the source end is the network element A, and may include directly or indirectly receiving the information from the network element A. The information may undergo necessary processing, for example, changing a format, between the source end and the destination end for information sending. However, the destination end may understand valid information from the source end. A similar expression in this application may be understood similarly, and details are not described herein.
   In other words, sending and receiving may be performed between devices, for example, between a terminal device #1 and a terminal device #2, or may be performed within a device. For example, sending or receiving is performed between components, modules, chips, software modules, or hardware modules in a device through a bus, a cable, or an interface.
6. In embodiments of this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.
7. In embodiments of this application, that information C is used to determine information D includes that the information D is determined only based on the information C, and the information D is determined based on the information C and other information. In addition, that the information C is used to determine the information D may further include an indirect determining case. For example, the information D is determined based on information E, and the information E is determined based on the information C.
8. In embodiments of this application, "store" or "save" may be storing in one or more memories. The one or more memories may be separately arranged, or may be integrated into an encoder or a decoder, a processor, or a communication apparatus. Alternatively, a part of the one or more memories may be separately arranged, and a part of the one or more memories are integrated into a decoder, a processor, or a communication apparatus. A type of the memory may be a storage medium in any form. This is not limited in this application.
9. In embodiments of this application, a "protocol" may be a standard protocol in the communication field, for example, may include a 4th generation (4th generation, 4G) network protocol/a 5th generation (5th generation, 5G) network protocol, a new radio (new radio, NR) protocol, and a related protocol applied to a future communication system. This is not limited in this application.
10. Arrows or blocks shown by dashed lines in diagrams of the accompanying drawings in this specification of this application indicate optional steps or optional modules.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a system integrating a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A device in a communication system may send a signal to another device or receive a signal from another device. The signal may include information, signaling, data, or the like. The device may alternatively be replaced with an entity, a network entity, a communication device, a communication module, a node, a communication node, or the like. In the present disclosure, the device is used as an example for description. For example, the communication system may include at least one terminal device and at least one network device. The network device may send a downlink signal to the terminal device, and/or the terminal device may send an uplink signal to the network device.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device having a wireless connection function. Currently, some examples of the terminal are: a mobile phone (mobile phone), a tablet computer, a notebook computer, a palmtop, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), or the like. This is not limited in embodiments of this application.

By way of example instead of limitation, in embodiments of this application, the terminal device may be a part of the network device that is configured to implement a function of the terminal device. For example, the network device may be an integrated access and backhaul (integrated access and backhaul, IAB) node (node), and the IAB node integrates two parts: a mobile termination (mobile termination, MT) and a distributed unit (distributed unit, DU), or the MT and a base station (base station, BS), where the BS includes a CU and a DU. When facing a parent node of the IAB node, the IAB node may be considered as a terminal. In this case, the IAB node plays a role of an MT.

By way of example instead of limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In this embodiment of this application, an apparatus configured to implement the function of the terminal device may be the terminal device, or may be an apparatus that can support the terminal device in implementing the function, for example, a chip system, where the apparatus may be installed in the terminal device or used in cooperation with the terminal device. In embodiments of this application, the chip system may include a chip, or may include a chip and another discrete component. In embodiments of this application, an example in which the apparatus configured to implement the function of the terminal device is a terminal device is merely used for description, and constitutes no limitation on the solutions in embodiments of this application.

In embodiments of this application, the network device may be a device configured to communicate with the terminal device, and the network device may also be referred to as an access network device or a radio access network device. For example, the network device may be a base station. The network device in embodiments of this application may be a radio access network (radio access network, RAN) node (or device) that connects the terminal device to a wireless network. The base station may cover any of the following names in a broad sense, or may be replaced with the following names: for example, a NodeB (NodeB), an evolved NodeB (evolved NodeB, eNB), a next generation NodeB (next generation NodeB, gNB), a relay station, an IAB node (for example, a part of the IAB node for implementing a BS function), an access point, a transmission point (transmitting and receiving point, TRP), a transmitting point (transmitting point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application.

In some deployments, the network device mentioned in embodiments of this application may be a device including a CU or a DU or including a CU and a DU, or a device including a CU-control plane node (a central unit-control plane (central unit-control plane, CU-CP)), a CU-user plane node (a central unit-user plane (central unit-user plane, CU-UP)), and a DU node. For example, the network device may include a gNB-CU-CP, a gNB-CU-UP, and a gNB-DU.

In some deployments, a plurality of RAN nodes coordinate to assist a terminal in implementing radio access, and different RAN nodes separately implement some functions of a base station. For example, the RAN node may be a CU, a DU, a CU-CP, a CU-UP, or an RU. The CU and the DU may be separately arranged, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions. If a fronthaul interface between a DU and an RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, in the fronthaul interface, a part of downlink and/or uplink baseband functions is moved for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, split manners between the DU and RU are different, corresponding to different categories (categories, Cats) of eCPRIs, such as eCPRI Cats A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions after the layer mapping (for example, one or more of RE mapping, digital beamforming (beamforming, BF), or inverse fast Fourier transform (inverse fast Fourier transform, IFFT)/cyclic prefix (cyclic prefix, CP) addition) are moved to the RU for implementation. For uplink transmission, with RE demapping as a splitting point, the DU is configured to implement the demapping and one or more functions before the demapping (that is, one or more of the following functions: decoding, de-rate matching, descrambling, demodulation, inverse discrete Fourier transform (inverse discrete Fourier transform, IDFT), channel equalization, or the RE demapping), and another function after the demapping (for example, one or more of digital BF or fast Fourier transform (fast Fourier transform, FFT) /CP removal) is moved to the RU for implementation. It may be understood that, for function descriptions of DUs and RUs corresponding to various categories of eCPRIs, refer to an eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented through a software module, a hardware module, or a combination of a software module and a hardware module.

In embodiments of this application, the network device may be an apparatus configured to implement a function of the network device, or may be an apparatus, for example, a chip system, a hardware circuit, a software module, or a combination of a hardware circuit and a software module, that can support the network device in implementing the function. The apparatus may be installed in the network device or used in cooperation with the network device. In embodiments of this application, an example in which the apparatus configured to implement the function of the network device is a network device is merely used for description, and constitutes no limitation on the solutions in embodiments of this application.

The network device and/or the terminal device may be deployed on land, including an indoor or outdoor device, or a handheld or vehicle-mounted device, or may be deployed on water, or may be deployed on an airplane, a balloon, or a satellite in the air. A scenario in which the network device and the terminal device are located is not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In a wireless communication network, for example, in a mobile communication network, services supported by the network are increasingly diversified, and therefore requirements that need to be met are increasingly diversified. For example, the network needs to support an ultra-high rate, an ultra-low delay, and/or massive connections. This feature makes network planning, network configuration, and/or resource scheduling increasingly complex. In addition, because the network has increasingly powerful functions, for example, supporting an increasingly high spectrum, supporting the higher-order multiple-input multiple-output (multiple-input multiple-output, MIMO) technology, and supporting new technologies such as beamforming, and/or beam management, network energy saving becomes a hot research topic. These new requirements, scenarios, and features cause unprecedented challenges to network planning, operation and maintenance, and efficient operation. To address the challenges, an artificial intelligence technology may be introduced into the wireless communication network to implement network intelligence.

To support the AI technology in the wireless network, an AI node may be further introduced into the network.

Optionally, the AI node may be deployed at one or more of the following positions in the communication system: an access network device, a terminal device, a core network device, or the like. Alternatively, the AI node may be separately deployed, for example, deployed at a position other than any one of the foregoing devices, for example, a host or a cloud server in an over-the-top (over-the-top, OTT) system. The AI node may communicate with another device in the communication system. For example, the another device may be one or more of the following: a network device, a terminal device, a network element of a core network, and the like.

It may be understood that, a quantity of AI nodes is not limited in embodiments of this application. For example, when there are a plurality of AI nodes, the plurality of AI nodes may be classified based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application. The AI node may be an AI network element or an AI module.

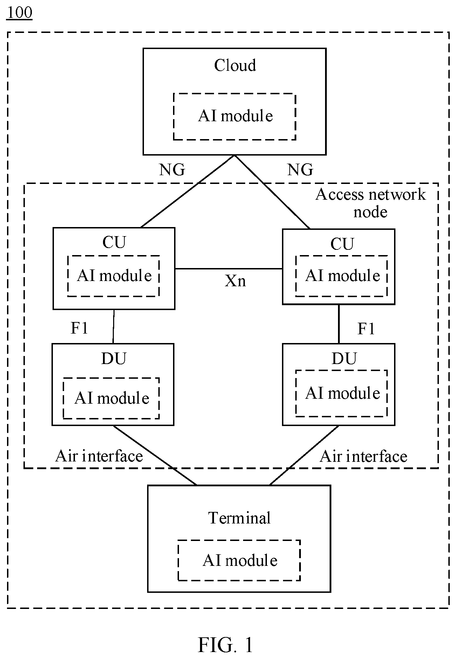

FIG. 1 is a diagram of an application framework 100 in a communication system to which an embodiment of this application is applicable. As shown in FIG. 1, network elements in the communication system are connected through an interface (for example, NG or Xn) or an air interface. One or more AI modules (for clarity, only one AI module is shown in FIG. 1) are arranged in one or more devices such as a cloud device, an access network node (RAN node), and a terminal of these network element nodes. The access network node may be used as an independent RAN node, or may include a plurality of RAN nodes, for example, include a CU and a DU. One or more AI modules may also be arranged in the CU and/or the DU. Optionally, the CU may be further split into a CU-CP and a CU-UP. One or more AI models are arranged in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network. One AI module may have one or more models. One model may obtain one output through inference, where the output includes one or more parameters. Learning processes, training processes, or inference processes of different models may be deployed in different nodes or devices, or may be deployed in a same node or device.

In the communication system, an AI model of the access network node exchanges necessary data with a cloud AI model, and the data is finally fed back to a user. The data may be carried on a physical channel, for example, may be carried on a physical downlink control channel (physical downlink control channel, PDCCH), a physical downlink shared channel (physical downlink share channel, PDSCH), a physical uplink shared channel (physical uplink share channel, PUSCH), or a physical uplink control channel (physical uplink control channel, PUCCH). For another example, the data may be carried on a physical sidelink control channel (physical sidelink control channel, PSCCH) or a physical sidelink shared channel (physical sidelink share channel, PSSCH).

In the communication system, a cloud AI module may be located in the cloud device, or may be separated from the cloud device. Similarly, for an AI model of an access network device, the AI module is located in a network device, or may be separated from the network device. This is not limited in this application.

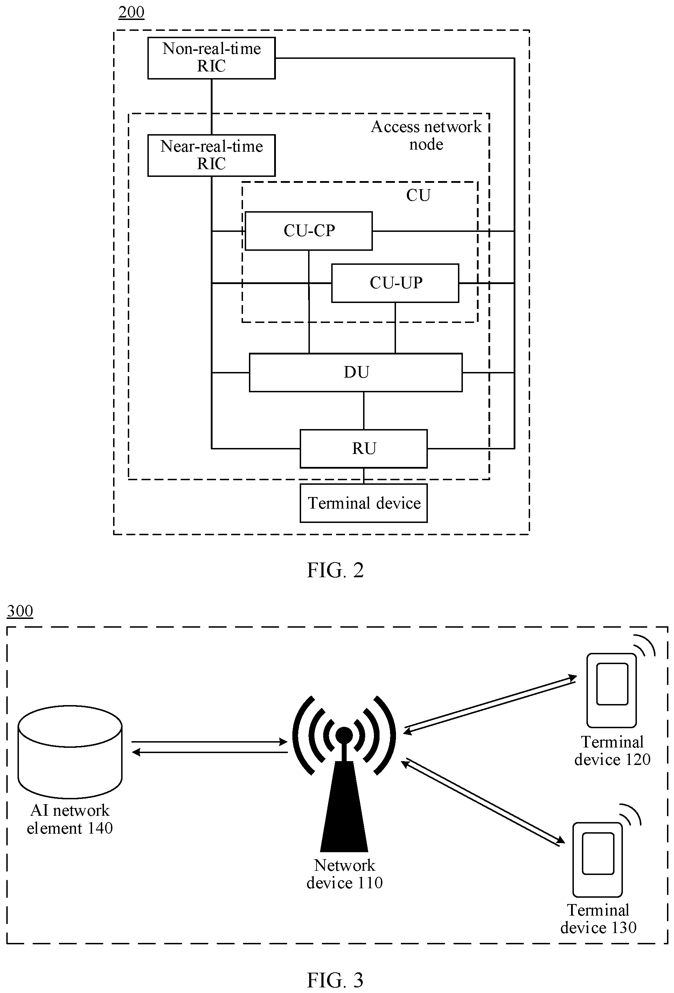

FIG. 2 is a diagram of an application framework 200 in a communication system to which an embodiment of this application is applicable. As shown in FIG. 2, the communication system includes a RAN intelligent controller (RAN intelligent controller, RIC). For example, RIC is configured to implement AI-related functions. The RIC includes a near-real-time RIC (near-real-time RIC, near-RT RIC) and a non-real-time RIC (non-real-time RIC, Non-RT RIC). The non-real-time RIC mainly processes non-real-time information, for example, delay-insensitive data. A delay of the data may be at a second level. The near real-time RIC mainly processes near real-time information, for example, delay-sensitive data. A delay of the data is at a level of tens of milliseconds.

The near-real-time RIC is configured to perform model training and inference, for example, is configured to: train an AI model and perform inference through the AI model. The near-real-time RIC may obtain network-side information and/or terminal-side information from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to: train an AI model and perform inference through the model. The non-real-time RIC may obtain network-side information and/or terminal-side information from a RAN node (for example, a CU, a CU-CP, a CU-UP, a DU, and/or an RU) and/or a terminal. The information may be used as training data or inference data, and the inference result can be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

Alternatively, the near-real-time RIC and the non-real-time RIC may be separately arranged as network elements. Optionally, the near-real-time RIC and the non-real-time RIC may alternatively serve as a part of another device. For example, the near real-time RIC is arranged on a RAN node (for example, a CU or a DU), and the non-real-time RIC is arranged on an OAM, a cloud server, a core network device, or another network device.

FIG. 3 is a diagram of a communication system 300 to which an embodiment of this application is applicable. As shown in FIG. 3, the communication system 300 may include at least one network device, for example, a network device 110. The communication system 300 may further include at least one terminal device, for example, a terminal device 120 and a terminal device 130. The network device 110 may communicate with the terminal device (for example, the terminal device 120 and the terminal device 130) through a radio link. Communication devices such as the network device 110 and the terminal device 120 in the communication system may communicate with each other through a multiple-antenna technology. The communication system 300 further includes an AI network element 140. The AI network element 140 is configured to perform an AI-related operation, for example, constructing a training dataset or training an AI model.

In a possible implementation, the network device 110 may send data related to training of the AI model to the AI network element 140, and the AI network element 140 constructs the training dataset and trains the AI model. For example, the data related to the training of the AI model may include data reported by the terminal device. The AI network element 140 may send a result of an operation related to the AI model to the network device 110, and the network device 110 forwards the result to the terminal device. For example, the result of the operation related to the AI model may include at least one of the following: a trained AI model, an evaluation result or a test result of the model, and the like.

It should be understood that only an example in which the AI network element 140 is directly connected to the network device 110 is used for description in FIG. 3. In another scenario, the AI network element 140 may be connected to both the network device 110 and the terminal device. Alternatively, the AI network element 140 may be connected to the network device 110 through a third-party network element. A connection relationship between the AI network element and another network element is not limited in embodiments of this application. For example, the AI network element 140 may alternatively be arranged in the network device as a module, for example, arranged in the network device 110 shown in FIG. 3.

It should be noted that FIG. 1 and FIG. 3 are merely simplified diagrams of examples for ease of understanding. For example, the communication system may further include another device, for example, may further include a wireless relay device and/or a wireless backhaul device, which is not shown in FIG. 1 and FIG. 3. In an actual application, the communication systems shown in FIG. 1 and FIG. 3 may include a plurality of network devices, and may also include a plurality of terminal devices. A quantity of network devices and a quantity of terminal devices included in the communication system are not limited in embodiments of this application.

It should be further noted that a system architecture and a service scenario that are described in embodiments of this application are intended to describe the technical solutions provided in embodiments of this application more clearly, but do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

For ease of understanding this application, the following briefly describes a part of technical concepts in this application.
(1) Machine learning (machine learning, ML) is an important technical way to implement AI. The ML can be classified into supervised learning, unsupervised learning, and reinforcement learning.

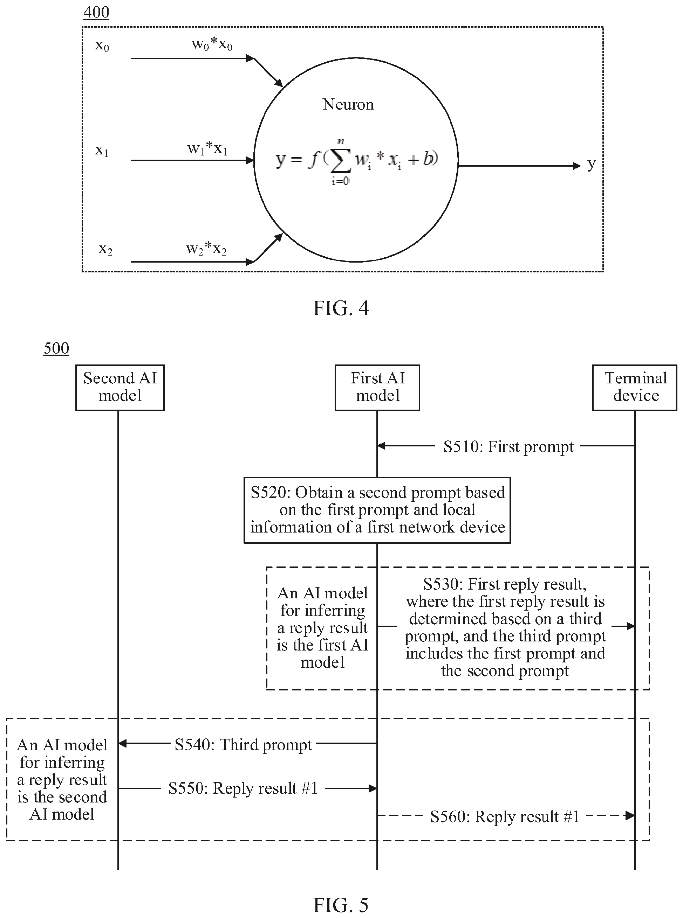

A deep neural network (deep neural network, DNN) is a specific implementation form of the ML. According to a universal approximation theorem, a neural network can theoretically approximate any continuous function, so that the neural network has a capability of learning any mapping. In a conventional communication system, a communication module needs to be designed with rich expert knowledge. However, a DNN-based deep learning communication system can automatically discover an implicit pattern structure from a large quantity of datasets and establish a mapping relationship between data, to obtain performance better than that of a conventional modeling method. An idea of the DNN comes from a neuron structure of brain tissue. Each neuron performs a weighted summation operation on input values of the neuron, and outputs a weighted summation result through a non-linear function. For description of the neuron structure, refer to FIG. 4.

FIG. 4 is a diagram of a neuron structure. As shown in FIG. 4, it is assumed that an input of a neuron is x = [x₀, ... , xₙ], a weight corresponding to the input is w = [w₀, ... , wₙ], and an offset of weighted summation is b. Forms of a non-linear function may be diversified. An example of the non-linear function is a maximum value function max{0, x}. In this case, an execution effect of the neuron may be $max \left\{0, {\sum }_{i = 0}^{n} {w}_{i} {x}_{i} + b\right\}$.

(2) AI model: The AI model is an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another ML model. The AI model in embodiments of this application may be a double-ended model or a single-ended model.

(3) Model inference: means using a trained model to resolve an actual problem.

(4) Natural language processing: The natural language processing is an interdisciplinary sub-field of computer science and linguistics. The natural language processing mainly involves giving a computer a capability to support and manipulate language. An aim of the natural language processing is to be a computer that can "understand" content of a file, including slightly different context of a language in the file. The technique then can accurately extract information and an insight included in a document, and categorize and organize the document.

(5) Prompt: is natural language text that describes a task that needs to be executed by AI.

(6) Context: In linguistics, the context is an object or an entity that surrounds a focus event, and is a framework that surrounds the event and provides a resource for appropriate interpretation of the event. A meaning of a word in natural language processing is usually deduced from a context in which the word is located.

It may be understood that the AI model may be implemented by a hardware circuit, software, or a combination of software and hardware. This is not limited. A non-limiting example of the software includes program code, a program, a subprogram, an instruction, an instruction set, code, a code segment, a software module, an application program, a software application program, or the like.

Recently, the large language model (large language model, LLM) has completely changed fields such as the natural language processing (natural language processing, NLP) and AI. The LLM is an AI model based on a machine learning algorithm and the natural language processing technology, and propels text generation, understanding, and interaction to a new era. The LLM is a language model characterized by a large size and a large capacity, and preprocesses a large amount of text data collected from the Internet based on an AI algorithm to implement training. The LLM usually includes tens of millions to billions of weights, and aims to simulate and understand a characteristic and a rule of a human language. The LLM builds an ultra-large-capacity neural network model to implement a plurality of applications such as information retrieval, emotion analysis, text generation, chatbot, and conversational AI. The LLM can be used to answer a question on any online platform, so that a visitor can receive meaningful information without contacting an expert corresponding to the question. For a question of a user, an LLM-based intelligent agent is an AI-driven program that uses the natural language processing and AI to infer an answer to the question. Different from most traditional Q&A application programs, performance of the LLM depends on large databases, and the large databases include text from different sources, including books, blogs, and news articles. The ultra-large databases enable the LLM to understand information about various topics and provide a better answer. The LLM enables a machine to understand a prompt provided by a user and provides useful help for a questioner. With improvement of LLM inference accuracy and expansion of an application scope, more and more users interact with this advanced application program to obtain answers to problems that are encountered and help the users to complete daily tasks.

Because the LLM has a huge quantity of parameters and needs to occupy huge storage space, and powerful hardware needs to be used to implement fast computing in an inference process of the LLM, a current LLM inference solution is usually implemented based on cloud computing, that is, cloud-based LLM inference. In this solution, an LLM application programming interface may be provided for a user, and the user (individual and/or organization) is allowed to access an LLM application program from any device that is connected to the Internet to obtain an inference result. The LLM application programming interface is essentially a connection between two devices, to enable the two devices to send information back and forth. A cloud provides the LLM for a user terminal, and the user interacts with the cloud through the user terminal to obtain an AI service. The following briefly describes an interaction process between the user and the cloud, and the interaction process mainly includes the following steps.
(1) The user sends a question prompt to a network device through the user terminal. For example, the question prompt sent by the user is "Please recommend a library".
(2) A base station sends the question prompt of the user to the cloud.
(3) The cloud runs an AI model to obtain a corresponding result requested by the user through computing.
(4) The cloud feeds back the result to the base station, and the base station sends, in downlink, the result fed back by the cloud to the user.

To reduce a delay of using the AI model to serve the user, at present, a cloud-network synergy inference solution is provided. Specifically, an LLM trained by the cloud is offloaded to the network device (for example, the base station), that is, some inference tasks of the cloud AI model are offloaded to a network entity device. This solution can prevent congestion caused when a large quantity of users access the cloud AI model to request an inference service. In addition, in this solution, it is considered that the network device has a sufficient computing capability to perform AI model inference and is closer to the user than a cloud server. Therefore, the user can interact with the AI model of the network device, reducing a transmission delay to some extent.

Generally, the user may not provide a comprehensive question description for both cloud-based LLM inference and cloud-network synergy-based LLM inference. In this case, inference accuracy is low when a question prompt is short. To implement a precise service, the AI model needs to clearly locate the question asked by the user. Consequently, the user needs to interact with the AI model a plurality of times, causing a long delay for the AI model to infer a reply that the user is satisfied with, and finally leading to poor user experience.

In view of this, this application provides an inference method, to effectively resolve the foregoing technical problem. The following describes in detail the method provided in this application with reference to FIG. 5.

FIG. 5 is a schematic flowchart of a communication method 500 according to this application. The method 500 includes the following steps.

S510: A terminal device sends a first prompt to a first AI model, where the first prompt is used to request returning a corresponding reply based on the first prompt. The first AI model receives the first prompt from the terminal device.

For example, if a user using the terminal device expects to search for a library, the first prompt may be "Please recommend a library".

For example, if the user using the terminal device expects to search for a destination of a park in Beijing, the first prompt may be "Please recommend a park in Beijing".

S520: The first AI model obtains a second prompt based on the first prompt and local information of a first network device, where the second prompt is used to describe information corresponding to at least one parameter that is in the local information of the first network device and that is related to the first prompt, the local information of the first network device is characteristic information of a cell covered by the first network device, and the first network device is a network device in a geographical range related to the first prompt.

It may be understood that if the first prompt does not include geographical range information (the first prompt may be "Please recommend a library"), or geographical range information included in the first prompt does not meet geographical range accuracy required for inference, the first AI model needs to further interact with the user until geographical range accuracy meeting an inference requirement is obtained. The geographical range accuracy meeting the inference requirement may be understood as that the first AI model determines that accuracy of the obtained geographical range related to the first prompt is not less than the geographical range accuracy required for inference. For example, the geographical range accuracy required for inference is a city, and the geographical range accuracy meeting the inference requirement is a specific city or a specific district in a specific city. For another example, the geographical range accuracy required for inference is a district in a city, and the geographical range accuracy meeting the inference requirement is a specific district in a specific city or a specific area of a specific district in a specific city.

Optionally, in the foregoing scenario, the method further includes: The first AI model sends a fifth prompt to the terminal device, where the fifth prompt is used to further interact with the user to obtain the geographical range information that meets the geographical range accuracy. Correspondingly, the terminal device receives the fifth prompt from the first AI model. Then, the user sends a seventh prompt to the first AI model through the terminal device, where the seventh prompt is used to describe the geographical range information related to the first prompt. Correspondingly, the first AI model receives the seventh prompt from the terminal device. Then, the first AI model obtains, based on the seventh prompt, local information of a network device (that is, the first network device) corresponding to a corresponding geographical range.

For example, the fifth prompt may prompt to enter the geographical range information related to the first prompt. For example, the first prompt is "Please recommend a library", and the fifth prompt may be "Enter a general range of the library recommended for your expectation, for example, Shanghai Pudong New District, Beijing Haidian District, and the like".

For example, the fifth prompt may also include a sixth prompt and a plurality of pieces of candidate geographical range information, and the sixth prompt prompts to select, from the plurality of pieces of candidate geographical range information, the geographical range information related to the first prompt. For example, the first prompt is "Please recommend a library", the fifth prompt may be "Please select, from the following options, a general range of the library recommended for you expectation", and the sixth prompt may include options corresponding to a plurality of geographical ranges, so that the user may select an option corresponding to an expected geographical range related to the first prompt.

In this case, when the first AI model obtains the geographical range information meeting the accuracy required for inference, the first AI model may obtain the second prompt based on the local information of the network device (that is, the first network device) corresponding to the obtained geographical range information, where the second prompt is used to describe the information corresponding to the at least one parameter that is in the local information of the first network device and that is related to the first prompt. The following provides two implementations of obtaining the second prompt based on the first prompt and the local information of the first network device.

Implementation 1: The second prompt may be considered as that the first AI model performs information mining (mines the at least one parameter related to the first prompt) based on the first prompt, and supplements the mined information based on the local information of the first network device (obtains, from local data of the first network device, information related to the mined at least one parameter), to complete the first prompt, thereby performing better inference and replying. The following provides descriptions by using an example.

For example, the first prompt may be "Please recommend a library", and a parameter related to the first prompt may be wireless quality data. It is assumed that after interacting with the user, the first AI model determines that a library in Pudong New District in which the user is currently located needs to be recommended to the user. In this case, the first AI model obtains information that is related to the wireless quality data and that is stored in local information of a network device (that is, the first network device) in Pudong New District. The information related to the wireless quality data may include but is not limited to the following parameters: wireless traffic data, a quantity of active users, and a user CQI. For example, the second prompt may be "A current base station is located in Pudong New District. In this area, on Monday, wireless traffic is a1 and a quantity of access users is b1, on Tuesday, wireless traffic is a2 and a quantity of access users is b2, ..., and in the future, wireless traffic is x and a quantity of access users is u".

Implementation 2: The first AI model obtains a plurality of reply results through inference based on the first prompt. Then, the first AI model performs information mining (mines the at least one parameter related to the first prompt) based on the first prompt, and supplements the mined information for the plurality of reply results based on the local information of the first network device (obtains, from local data of the first network device, information related to at least one parameter related to each reply result), to complete the plurality of reply results, thereby determining an optimal reply result. The following provides descriptions by using an example.

For example, the first prompt may be "Please recommend a library". It is assumed that after interacting with the user, the first AI model determines that a library in Pudong New District in which the user is currently located needs to be recommended to the user, and the first AI model obtains a plurality of libraries in Pudong New District (that is, the plurality of reply results) through inference. For example, the plurality of libraries in Pudong New District include "library A, library B, and library C". Then, the first AI model obtains information that is related to wireless quality data related to the plurality of reply results and that is stored in local information of a network device (that is, the first network device) in Pudong New District. For example, the second prompt may be "A current base station is located in Pudong New District. In an area in which the library A is located, on Monday, wireless traffic is a11 and a quantity of access users is b11, on Tuesday, wireless traffic is a12 and a quantity of access users is b12, ..., and in the future, wireless traffic is x1 and a quantity of access users is u1. In an area in which the library B is located, on Monday, wireless traffic is a21 and a quantity of access users is b21, on Tuesday, wireless traffic is a22 and a quantity of access users is b22, ..., and in the future, wireless traffic is x2 and a quantity of access users is u2. In an area in which the library C is located, on Monday, wireless traffic is a31 and a quantity of access users is b31, on Tuesday, wireless traffic is a32 and a quantity of access users is b32, ..., and in the future, wireless traffic is x3 and a quantity of access users is u3".

Optionally, before S520, the method further includes: The first AI model obtains a fourth prompt based on the first prompt, where the fourth prompt is used to describe the at least one parameter related to the first prompt. For example, the first prompt is "Please recommend a library", and the fourth prompt may be "Also take wireless service quality into account". For example, the first prompt may be "Please recommend a park", and the fourth prompt may be "Also take an environment situation into account". For example, information that is in the local information of the first network device and that is related to environment perception data may include but is not limited to information such as a temperature, humidity, atmospheric pressure, and a wind speed.

Then, the first AI model obtains the second prompt based on the first prompt, the local information of the first network device, and the fourth prompt.

It should be understood that whether the first AI model generates the fourth prompt is not limited in this application. The first AI model may alternatively skip generating the fourth prompt, and directly obtain the second prompt. This is not limited in this application.

It may be understood that, in Implementation 1, the first prompt is supplemented based on the local information of the first network device, to complete context information of the first prompt, so that the AI model for subsequent inference can better perform inference on the first prompt based on the prompt with the context information supplemented to obtain a more accurate reply result. In Implementation 2, based on the first prompt, the first AI model first roughly infers the plurality of reply results for the first prompt, and then supplements the plurality of reply results based on the local information of the first network device, to complete context information of the corresponding replie results, so that the AI model for subsequent inference can select an optimal reply result from the plurality of results based on the plurality of reply results with the context information supplemented.

For example, the AI model for subsequently inference out the reply result may be the first AI model or another AI model.

It should be understood that if the AI model for subsequently inference out the reply result is the first AI model, S530 is performed. For example, the first AI model may be an AI model of a network device serving the terminal device, or the second AI model may be a cloud AI model.

It should be understood that if the AI model for subsequently inference out the reply result is the second AI model, S540 is performed. For example, the first AI model may be an AI model of a network device in a cloud-network synergy inference scenario, and the second AI model is a cloud AI model in the cloud-network synergy inference scenario.

For example, the first AI model and the second AI model are LLMs.

S530: The first AI model sends a first reply result to the terminal device, where the first reply result is determined based on a third prompt, and the third prompt includes the first prompt and the second prompt. Correspondingly, the first AI model receives the first reply result from the terminal device.

For example, the second prompt may further include the fourth prompt.

Based on the foregoing Implementation 1, for example, if the first prompt is "Please recommend a library", the third prompt may be "Please recommend a library. Also take wireless quality data into account. A current base station is located in Pudong New District. In this area, on Monday, wireless traffic is a1 and a quantity of access users is b1, on Tuesday, wireless traffic is a2 and a quantity of access users is b2, ..., and in the future, wireless traffic is x and a quantity of access users is u". Then, the first AI model may perform inference based on the third prompt with the context information supplemented, and send the first reply result obtained through inference to the terminal device (the user).

Based on the foregoing Implementation 2, for example, if the first prompt is "Please recommend a library", the third prompt may be "Please recommend a library. Also take wireless quality data into account. A current base station is located in Pudong New District. In an area in which the library A is located, on Monday, wireless traffic is a11 and a quantity of access users is b11, on Tuesday, wireless traffic is a12 and a quantity of access users is b12, ..., and in the future, wireless traffic is x1 and a quantity of access users is u1. In an area in which the library B is located, on Monday, wireless traffic is a21 and a quantity of access users is b21, on Tuesday, wireless traffic is a22 and a quantity of access users is b22, ..., and in the future, wireless traffic is x2 and a quantity of access users is u2. In an area in which the library C is located, on Monday, wireless traffic is a31 and a quantity of access users is b31, on Tuesday, wireless traffic is a32 and a quantity of access users is b32, ..., and in the future, wireless traffic is x3 and a quantity of access users is u3". Then, the first AI model may perform inference based on the plurality of reply results with the context information supplemented, and select an optimal reply result (the first reply result) from the plurality of reply results and send the optimal reply result to the terminal device (the user).

Optionally, because a plurality of replies corresponding to the first prompt have been provided in Implementation 2, the third prompt may not include the first prompt. This is not limited in this application.

In a possible implementation, the first AI model may verify an inference result of the first AI model through the obtained local information of the first network device, to ensure that a reply finally sent to the user is an appropriate reply, and avoid a decrease in user experience caused when the first AI model obtains an inappropriate reply result due to a hallucination. For example, the user expects a recommendation of a library in Shanghai Pudong New District, but a reply result finally provided by the first AI model is a library in Shanghai Jing'an District.

Optionally, before S530, the method further includes: The first AI model verifies and determines, based on the local information of the first network device, that the first reply result is an appropriate reply result.

Optionally, before S530, the method further includes: The first AI model obtains a fourth reply result through inference based on the third prompt; and the first AI model verifies, based on the local information of the first network device, that the fourth reply result is an inappropriate reply result. Then, the first AI model may infer a new reply result based on the third prompt, until the first AI verifies that the reply result is an appropriate reply result.

S540: The first AI model sends the third prompt to the second AI model. Correspondingly, the second AI model receives the third prompt from the first AI model.

For descriptions of the third prompt, refer to the descriptions in S530. Details are not described herein again.

Optionally, after the second AI model obtains the third prompt, the method further includes the following steps.

S550: The second AI model sends a reply result #1 to the first AI model, where the reply result #1 is a reply result obtained by the second AI model through inference based on the third prompt. Correspondingly, the first AI model receives the reply result #1 from the second AI model.

S560: The first AI model sends the reply result #1 to the terminal device.

Optionally, in this scenario, the first AI model may alternatively verify an inference result of the second AI model by using the obtained local information of the first network device, to ensure that a reply finally sent to the user is an appropriate reply, and avoid a decrease in user experience caused when the second AI model obtains an inappropriate reply result due to a hallucination. In this implementation, the second AI model is allowed to interact with the first AI model. In this implementation, in comparison with independent verification performed by the second AI model that cannot obtain local unique information of the first network device, the reply result obtained through synergy verification and inference can better ensure validity of a result fed back to the user.

In this case, based on the synergy verification manner provided above, after the first AI model receives the reply result #1, the method further includes: The first AI model verifies, based on the local information of the first network device, that the reply result #1 is an appropriate reply result, the first AI model sends the reply result #1 to the terminal device, and correspondingly, the terminal device receives the reply result #1 from the first AI model. Alternatively, the first AI model verifies, based on the local information of the first network device, that the reply result #1 is an inappropriate reply result, the first AI model does not perform S560, the first AI model sends an eighth prompt to the second AI model, where the eighth prompt includes the third prompt and a ninth prompt, and the ninth prompt prompts to infer, based on the third prompt, a new reply result, and correspondingly, the second AI model receives the eighth prompt from the first AI model. Then, the second AI model infers a new reply result #2 based on the third prompt and sends the reply result #2 to the first AI model, and the first AI model continues to verify, based on the local information of the first network device, whether the reply result #2 is an appropriate reply result.

Based on the foregoing technical solution, the first AI model may perform accurate inference through the local information that is of the first network device and that is related to the first prompt, or assist the second AI model in performing accurate inference, to reduce a quantity of times of asking questions to the user. In addition, the inference result is verified based on the local data of the first network device, so that a requirement of the user for quality of service can be further ensured based on the accurate inference, thereby improving user experience.

The following continues to describe the method 500. In the method 500, the first AI model may store, in a local sample library, a first sample corresponding to a final reply result of the first prompt sent to a user terminal, where the first sample includes <"first prompt", "third prompt", and "final reply result of the first prompt">.

It may be understood that the local sample library of the first AI model further stores samples corresponding to a plurality of prompts previously entered by the user terminal. In the method 500, in S510, after receiving the first prompt from the user terminal, the first AI model may select, from historical samples of the user in the sample library, a plurality of samples related to the first prompt, and add the plurality of samples before the first prompt. Then, in S520, the first AI model obtains the second prompt based on the first prompt, the local information of the first network device, and a tenth prompt, where the tenth prompt is used to describe at least one historical sample related to the first prompt in the historical samples of the user included in the sample library of the first AI model. In addition, the third prompt used by the first AI model to infer the reply result in S530 and used by the second AI model to infer the reply result in S540 includes the tenth prompt, the first prompt, and the second prompt. The subsequent steps remain unchanged, and details are not described herein again. In the foregoing solution, context information of the user prompt is enriched based on the historical samples of the user, so that the AI model for inference out a reply result can further provide an accurate personalized service for the user based on information related to a user habit or preference during inference, thereby further improving user experience.

For ease of understanding the solution shown in the method 500, the following uses a cloud-network synergy inference scenario as an example to describe the method 500 based on Implementation 2 in S520.

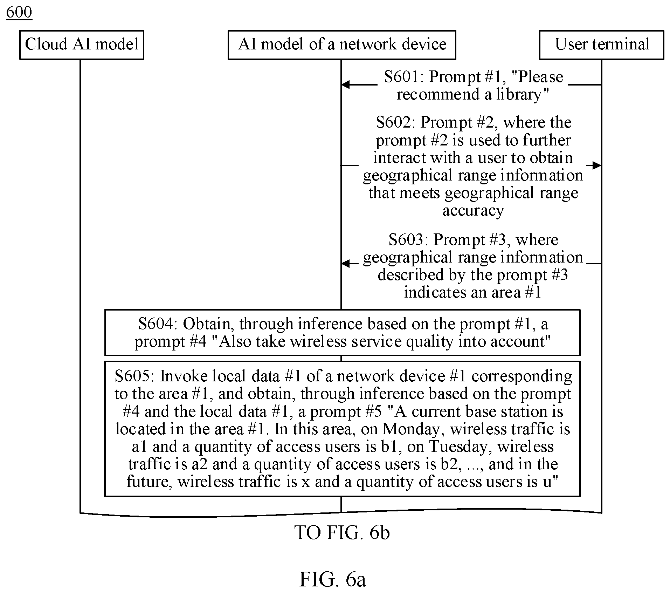

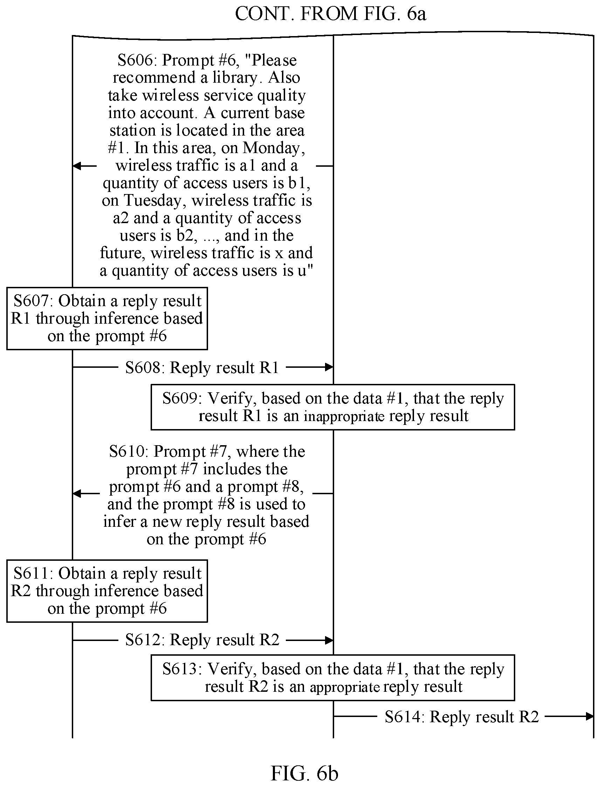

FIG. 6a and FIG. 6b are a diagram of a cloud-network synergy inference method 600 according to this application. It should be understood that the method 600 is only an implementation procedure of a possible specific scenario of cloud-network synergy inference. An AI model of a network device may be considered as the first AI model in the method 500, and a cloud AI model may be considered as the second AI model in the method 500. The method includes the following steps.

S601: A user terminal sends a prompt #1 (that is, an example of the first prompt) to the AI model of the network device, where the prompt #1 is "Please recommend a library". Correspondingly, the AI model of the network device receives the prompt #1 from the user terminal.

S602: The AI model of the network device determines that the prompt #1 does not include geographical range information, and sends a prompt #2 (that is, an example of the fifth prompt) to the user terminal, where the prompt #2 is used to further interact with a user to obtain geographical range information that meets geographical range accuracy.

S603: The user terminal sends a prompt #3 (that is, the seventh prompt) to the AI model of the network device, where the prompt #3 is used to describe geographical range information related to the prompt #1. Correspondingly, the AI model of the network device receives the prompt #3 from the terminal device.

For ease of description, an example in which the geographical range information described by the prompt #3 indicates an area #1 is used for description herein, and the area #1 meets the geographical range accuracy required for inference out a reply result.

S604: The AI model of the network device obtains a prompt #4 (that is, an example of the fourth prompt) through inference based on the prompt #1.

For example, if the first AI model locally stores historical samples of the user, the first AI model may select, from the historical samples of the user, at least one sample related to the prompt #1, and add the sample before the prompt #1. If the historical sample is added, it may be considered that the prompt #1 in the following includes the selected historical sample and the prompt #1.

The AI model of the network device uses the received prompt #1 as an input of the AI model, to explore a deeper requirement behind the user prompt. For example, the first AI model of the network device may infer, based on the "library" in the prompt, that the user is mainly engaged in an indoor activity, and may use a wireless network to implement operations such as online book reading and retrieval, in-library navigation, and electronic cloud note taking. Therefore, the prompt #4 "Also take wireless service quality into account" may be inferred and generated.

Optionally, the AI model of the network device may be a long short term memory (long short term memory, LSTM) model with a small capacity, or may be a model with a large capacity, for example, a generative pre-trained transformer (Generative Pre-Trained Transformer, GPT) or bidirectional encoder representations from transformers (bidirectional encoder representations from transformers, BERT). A specific size and scale of the AI model are not limited in this application provided that storage space and a computing capability of the network device are enough.

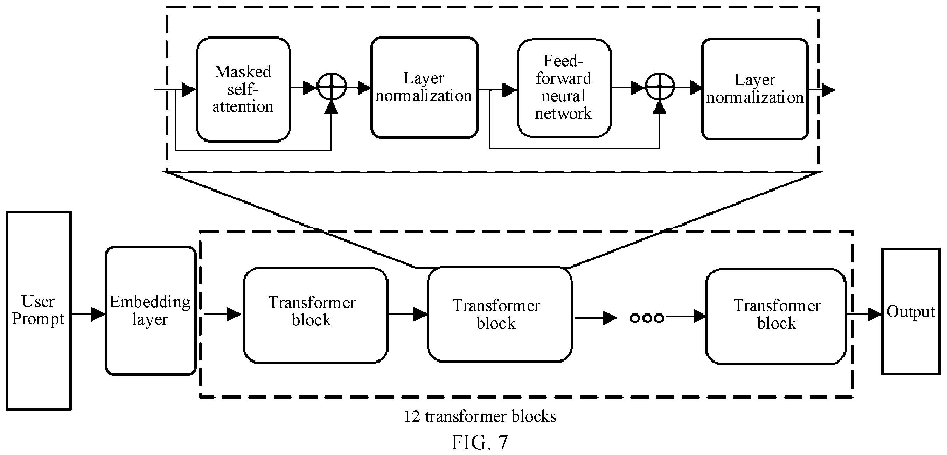

FIG. 7 is a diagram of a possible structure of an AI model of a network device. This model is a GPT model. Optionally, a parameter of the AI model of the network device is generated by the network device by using a policy, for example, may be generated through pre-training, downloaded from a cloud, or obtained from another third-party entity. As shown in FIG. 7, the AI model includes 12 transformer blocks (Transformer Blocks), and each transformer block includes a masked self-attention module, a layer normalization module, a feed-forward neural network module, and a layer normalization module. A user prompt is used as an input of the 1^{st} transformer block for learning. Then, an output of the 1^{st} transformer block is used as an input of the 2^{nd} transformer block for further learning until the last transformer block obtains an output through inference.

S605: The AI model of the network device obtains a prompt #5 (that is, an example of the second prompt) through inference based on the prompt #4 and local data #1 of the network device #1 (that is, an example of the first network device), where the network device #1 is a network device corresponding to the area #1.

For example, the prompt #4 is "Also take wireless service quality into account", specific data related to wireless service quality in the data #1 is invoked, and the prompt #5 obtained through inference may be "A current base station is located in the area #1, and in this area, on Monday, wireless traffic is a1 and a quantity of access users is b1, on Tuesday, wireless traffic is a2 and a quantity of access users is b2, ..., and in the future, wireless traffic is x and a quantity of access users is u".

Optionally, before the AI model of the network device invokes the data #1 of the network device #1, the AI model of the network device further needs to request the user to authorize the AI model to use local data of a corresponding network device during inference. After the user completes authorization, the network device may invoke a local database of the corresponding network device (for example, the network device #1) when performing inference through the AI model of the network device.

S606: The AI model of the network device sends a prompt #6 (that is, an example of the third prompt) to the cloud AI model. Correspondingly, the cloud AI model receives the prompt #6 from the AI model of the network device.

For example, the prompt #6 includes the prompt #1, the prompt #4, and a prompt #5. To be specific, the prompt #6 is "Please recommend a library. Also take wireless service quality into account. A current base station is located in the area #1. In this area, on Monday, wireless traffic is a1 and a quantity of access users is b1, on Tuesday, wireless traffic is a2 and a quantity of access users is b2, ..., and in the future, wireless traffic is x, and a quantity of access users is u". It can be learned that the cloud AI model provides supplementary descriptions for the prompt #1, and context information of the prompt #1 is supplemented to the prompt #6 that is finally sent to the cloud AI model. This method can help the cloud AI model to infer a more accurate reply result.

S607: The cloud AI model obtains a reply result R1 through inference based on the prompt #6.

S608: The cloud AI model sends the reply result R1 to the AI model of the network device. Correspondingly, the AI model of the network device receives the reply result R1 from the cloud AI model.

S609: The AI model of the network device verifies, based on the data #1, that the reply result R1 is an inappropriate reply result, and continues to perform S610.

S610: The AI model of the network device sends a prompt #7 (that is, an example of the eighth prompt) to the cloud AI model, where the prompt #7 includes the prompt #6 and a prompt #8 (that is, an example of the ninth prompt), and the prompt #8 prompts to infer, based on the prompt #6, a new reply result. For example, the prompt #8 is "Please provide a reply result other than R1". Correspondingly, the cloud AI model receives the prompt #7 from the AI model of the network device.

S611: The cloud AI model obtains a reply result R2 through inference based on the prompt #6.

S612: The cloud AI model sends the reply result R2 to the AI model of the network device. Correspondingly, the AI model of the network device receives the reply result R2 from the cloud AI model.

S613: The AI model of the network device verifies, based on the data #1, that the reply result R2 is an appropriate reply result.

S614: The AI model of the network device sends the reply result R2 to the user terminal. Correspondingly, the user terminal receives the reply result R2 from the AI model of the network device.

It may be understood that the method 600 is described in detail by using an example in which the prompt #1 is "Recommend a library". For example, if the prompt #1 is "Please recommend a park", based on the prompt, a difference from the method 600 only lies in that context information that needs to be supplemented in an inference process is different. Specifically, in S604, the AI model of the network device infers, based on the "park" in the prompt #1, that the user is mainly engaged in an outdoor activity, and therefore infers and generates the prompt #4 "Also take an environment situation into account". In S605, the AI model of the network device invokes, based on the prompt #4 "Also take an environment situation into account", specific data that is in the data #1 and that is related to environment perception data, and the prompt #5 obtained through inference may be "A current base station is located in the area #1. In this area, at 8:00, a temperature is a1 and humidity is b1, ..., at 9:00, the temperature is a2 and the humidity is b2, ..., and in the future, at 8:00, the temperature is x1 and the humidity is x1, ..., at 9:00, the temperature is x2 and the humidity is x2, ..." In S606, the AI model of the network device sends the prompt #6 to the cloud AI model, and the prompt #6 is "Please recommend a park. Also take environment situation into account. A current base station is located in the area #1. In this area, at 8:00, a temperature is a1 and humidity is b1, ..., at 9:00, the temperature is a2 and the humidity is b2, ..., and in the future, at 8:00, the temperature is x1 and the humidity is y1, ..., at 9:00, the temperature is x2 and the humidity is y2, ..." Other steps are similar to those in the method 600, and details are not described herein again.

It can be understood that some optional features in embodiments of this application may be independent of other features in some scenarios, or may be combined with other features in some scenarios. This is not limited.

It should be further understood that sequence numbers of the foregoing processes do not mean execution sequences. The execution sequences of the processes should be determined based on functions and internal logic of the processes, and should not be construed as any limitation on the implementation processes of embodiments of this application.

It can also be understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be further understood that, in the foregoing method embodiments, methods and operations implemented by a first AI model may alternatively be implemented by a component (for example, a chip or a circuit) in the first AI model.

The foregoing describes in detail the method provided in embodiments of this application with reference to FIG. 1 to FIG. 7. The foregoing method is mainly described from a perspective of the first AI model and interaction between the first AI model and the second AI model. It may be understood that, to implement the foregoing functions, the first AI model includes a corresponding hardware structure and/or software module for performing the functions.

A person skilled in the art should be aware that, in this application, in combination with the examples described in embodiments disclosed in this specification, units and algorithm steps may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

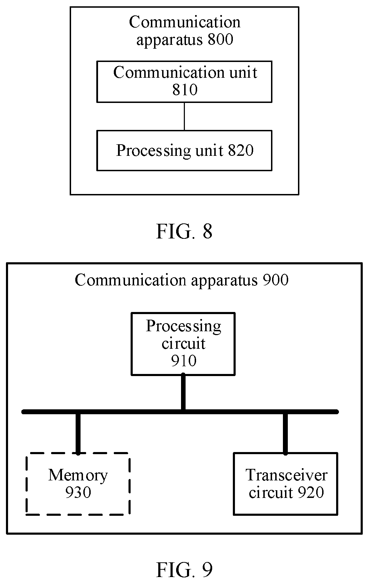

The following describes in detail a communication apparatus provided in embodiments of this application with reference to FIG. 8 and FIG. 9. It should be understood that descriptions of apparatus embodiments correspond to the descriptions of the method embodiments. Therefore, for content that is not described in detail, refer to the foregoing method embodiments. For brevity, some content is not described again. In embodiments of this application, the first AI model may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used. An example in which each functional module is obtained through division based on each corresponding function is used below for description.

The foregoing describes in detail the communication method provided in this application. The following describes a communication apparatus provided in this application. In a possible implementation, the apparatus is configured to implement steps or procedures corresponding to the first AI model in the foregoing method embodiments.

FIG. 8 is a block diagram of a communication apparatus 800 according to an embodiment of this application. As shown in FIG. 8, the apparatus 800 may include a communication unit 810 and a processing unit 820. The communication unit 810 may communicate with an external device, and the processing unit 820 is configured to process data. The communication unit 810 may also be referred to as a communication interface or a transceiver unit.

In a possible design, the apparatus 800 may implement steps or procedures performed by the first AI model in the foregoing method embodiments. The processing unit 820 is configured to perform processing-related operations of the first AI model in the foregoing method embodiments, and the communication unit 810 is configured to perform sending-related operations of the first AI model in the foregoing method embodiments.

It should be understood that the apparatus 800 herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the first AI model in the foregoing embodiments, and may be configured to perform procedures and/or steps corresponding to the first AI model in the foregoing method embodiments. To avoid repetition, details are not described herein again.

The apparatus 800 in each of the foregoing solutions has a function of implementing corresponding steps performed by the first AI model in the foregoing methods. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform the sending/receiving operations and the processing-related operations in the method embodiments.

In addition, alternatively, the communication unit may be a transceiver circuit (for example, may include a receiving circuit and a sending circuit), and the processing unit may be a processing circuit. In this embodiment of this application, the apparatus in FIG. 8 may be the first AI model in the foregoing embodiments, or may be a chip or a chip system, for example, a system-on-a-chip (system-on-a-chip, SoC). The communication unit may be an input/output circuit or a communication interface. The processing unit is a processor, a microprocessor, or an integrated circuit integrated on the chip. This is not limited herein.

FIG. 9 is a block diagram of a communication apparatus 900 according to an embodiment of this application. The apparatus 900 includes a processing circuit 910 and a transceiver circuit 920. The processing circuit 910 and the transceiver circuit 920 communicate with each other through an internal connection path, and the processing circuit 910 is configured to execute instructions, to control the transceiver circuit 920 to send a signal and/or receive a signal. The transceiver circuit 920 may also be referred to as a transceiver interface.

Optionally, the apparatus 900 may further include a memory 930. The memory 930 communicates with the processing circuit 910 and the transceiver circuit 920 through an internal connection path. The memory 930 is configured to store instructions. The processing circuit 910 may execute the instructions stored in the memory 930. In a possible implementation, the apparatus 900 is configured to implement procedures and steps corresponding to the first AI model in the foregoing method embodiments.

It should be understood that the apparatus 900 may be specifically the first AI model in the foregoing embodiment, or may be a chip or a chip system. Correspondingly, the transceiver circuit 920 may be a transceiver interface of the chip. This is not limited herein. Specifically, the apparatus 900 may be configured to perform steps and/or procedures corresponding to the first AI model in the foregoing method embodiments. Optionally, the memory 930 may include a read-only memory and a random access memory, and provide instructions and data for the processor. A part of the memory may further include a nonvolatile random access memory. For example, the memory may further store information about a device type. The processing circuit 910 may be configured to execute the instructions stored in the memory. When the processing circuit 910 executes the instructions stored in the memory, the processing circuit 910 is configured to perform the steps and/or the procedures in the foregoing method embodiments corresponding to the first AI model.

In an implementation process, steps in the foregoing methods can be implemented through a hardware integrated logical circuit in the processor, or through instructions in a form of software. The steps of the method disclosed with reference to embodiments of this application may be directly performed by a hardware processor, or may be performed through a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processing circuit in embodiments of this application may be a processing circuit in an integrated circuit chip, and has a signal processing capability. In an implementation process, steps in the foregoing method embodiments can be implemented through a hardware integrated logical circuit in the processing circuit, or through instructions in a form of software. The foregoing processing circuit may be the following device or may be included in the following device: a general purpose processor, digital signal processing (digital signal processing, DSP), an ASIC, a field-programmable gate array (field-programmable gate array, FPGA) or another programmable logic device, a discrete gate or transistor logic device, or a discrete hardware component. The processor in embodiments of this application may implement or perform the methods, the steps, and the logical block diagrams that are disclosed in embodiments of this application. The general purpose processor may be a microprocessor, or the processor may be any conventional processor or the like. The steps of the method disclosed with reference to embodiments of this application may be directly performed by a hardware decoding processor, or may be performed through a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processing circuit reads information in the memory and completes the steps in the foregoing methods in combination with hardware of the processor.

It may be understood that the memory in embodiments of this application may be a volatile memory or a non-volatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and the methods described in this specification includes but is not limited to these memories and any memory of another appropriate type.

It should be noted that, when the processing circuit is a processor or is included in the processor, and the processor is a general purpose processor, a DSP, an ASIC, an FPGA or another programmable logic device, a discrete gate or a transistor logic device, or a discrete hardware component, the memory (storage module) may be integrated into the processor.

In addition, this application further provides a computer-readable storage medium. The computer-readable storage medium stores computer instructions. When the computer instructions are run on a computer, operations and/or procedures performed by the first AI model in the method embodiments of this application are performed.

This application further provides a computer program product, and the computer program product includes computer program code or instructions. When the computer program code or the instructions are run on a computer, operations and/or procedures performed by the first AI model in the method embodiments of this application are caused to be performed.

In addition, this application further provides a chip. The chip includes a processing circuit. A memory configured to store a computer program is arranged independently of the chip or is arranged in the chip. The processing circuit is configured to execute the computer program stored in the memory, to cause the operations and/or processing performed by the first AI model in any method embodiment to be performed.

Further, the chip may include a communication interface. The communication interface may be an input/output interface, an interface circuit, or the like. Further, the chip may include the memory.

In addition, this application further provides a communication system, including the first AI model and the terminal device in embodiments of this application. Optionally, the communication system further includes the second AI model.

It should be further noted that the memory described in this specification includes but is not limited to these memories and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus and method may be implemented in other manners. For example, the described apparatus embodiment is merely an example. For example, the unit division is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

When the function is implemented in the form of a software functional unit and sold or used as an independent product, the integrated unit may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that, in this application, "at least one" means one or more, and "a plurality of" means two or more. "At least one item (piece)" or a similar expression thereof refers to one item (piece) or a plurality of items (pieces), that is, any combination of these items, including a singular item (piece) or any combination of a plurality of items (pieces). For example, at least one item (piece) of a, b, or c may indicate: a, b, c, a and b, a and c, b and c, or a, b, and c.

It should be further understood that, the term "and/or" in this specification describes only an association relationship for describing associated objects and represents that three relationships may exist. For example, A and/or B may represent the following three cases: Only A exists, both A and B exist, and only B exists, where A and B may be singular or plural. The character "/" represents an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined only based on A. B may alternatively be determined based on A and/or other information.

## Claims

1. An inference method, comprising:
receiving, by a first artificial intelligence AI model, a first prompt from a terminal device, wherein the first prompt is used to request returning a corresponding reply based on the first prompt;
obtaining, by the first AI model, a second prompt based on the first prompt and local information of a first network device, wherein the second prompt is used to describe information corresponding to at least one parameter that is in the local information of the first network device and that is related to the first prompt, the local information of the first network device is characteristic information of a cell covered by the first network device, and the first network device is a network device in a geographical range related to the first prompt; and
sending, by the first AI model, a third prompt to a second AI model, wherein the second AI model is an AI model that infers a reply corresponding to the first prompt, and the third prompt comprises the first prompt and the second prompt,
or
sending, by the first AI model, a first reply result to the terminal device based on the third prompt.

2. The method according to claim 1, wherein the first AI model obtains a fourth prompt based on the first prompt, and the fourth prompt is used to describe the at least one parameter related to the first prompt.

3. The method according to claim 2, wherein the third prompt further comprises the fourth prompt.

4. The method according to any one of claims 1 to 3, wherein the first prompt does not comprise geographical range information or geographical range information comprised in the first prompt does not meet geographical range accuracy required for inference, and before the obtaining, by the first AI model, the second prompt, the method further comprises:
sending, by the first AI model, a fifth prompt to the terminal device, wherein the fifth prompt prompts to enter the geographical range information related to the first prompt, or the fifth prompt comprises a sixth prompt and a plurality of pieces of candidate geographical range information, and the sixth prompt prompts to select, from the plurality of pieces of candidate geographical range information, the geographical range information related to the first prompt;
receiving, by the first AI model, a seventh prompt from the terminal device, wherein the seventh prompt indicates the geographical range information related to the first prompt; and
obtaining, by the first AI model, the local information of the first network device based on the seventh prompt.

5. The method according to any one of claims 1 to 4, wherein the first AI model sends the third prompt to the second AI model, and the method further comprises:
receiving, by the first AI model, a second reply result from the second AI model, wherein the second reply result is a reply result obtained by the second AI model through inference based on the third prompt;
verifying, by the first AI model based on the local information of the first network device, that the second reply result is an appropriate reply result; and
sending, by the first AI model, the second reply result to the terminal device.

6. The method according to any one of claims 1 to 5, wherein the method further comprises:
receiving, by the first AI model, a third reply result from the second AI model, wherein the third reply result is a reply result obtained by the second AI model through inference based on the third prompt; and
verifying, by the first AI model based on the local information of the first network device, that the third reply result is an inappropriate reply result, and sending, by the first AI model, an eighth prompt to the second AI model, wherein the eighth prompt comprises the third prompt and a ninth prompt, and the ninth prompt prompts to infer a new reply result based on the third prompt.

7. The method according to any one of claims 1 to 6, wherein before the sending, by the first AI model, a first result to the terminal device based on the third prompt, the method further comprises:
verifying, by the first AI model based on the local information of the first network device, that the first result is an appropriate reply result.

8. The method according to claim 7, wherein before the sending, by the first AI model, the first reply result to the terminal device based on the third prompt, the method further comprises:
obtaining, by the first AI model, a fourth reply result through inference based on the third prompt; and
verifying, by the first AI model based on the local information of the first network device, that the fourth reply result is an inappropriate reply result.

9. The method according to any one of claims 1 to 8, wherein the method further comprises:
storing, by the first AI model, a first sample in a local sample library, wherein the first sample comprises the third prompt and a final reply result of the third prompt.

10. The method according to claim 9, wherein the obtaining, by the first AI model, the second prompt based on the first prompt and the local information of the first network device comprises:
obtaining, by the first AI model, the second prompt based on the first prompt, the local information of the first network device, and a tenth prompt, wherein the tenth prompt is used to describe at least one sample related to the first prompt in the sample library.

11. The method according to any one of claims 1 to 10, wherein
the first AI model is an AI model that infers a reply corresponding to the first prompt, and the first AI model is a cloud AI model or an AI model of a network device that serves the terminal device,
or
the second AI model is an AI model that infers a reply corresponding to the first prompt, the first AI model is an AI model of a network device that serves the terminal device, and the second AI model is a cloud AI model.

12. A communication apparatus, comprising a module or a unit configured to perform the method according to any one of claims 1 to 11.

13. A communication apparatus, comprising at least one processor, wherein the at least one processor is configured to execute a computer program or instructions stored in a memory, to cause the apparatus to perform the method according to any one of claims 1 to 11.
